(19) Europäisches Patentamt / European Patent Office / Office européen des brevets

(11) **EP 3 306 815 B1**

(12) **FASCICULE DE BREVET EUROPEEN**

(45) Date de publication et mention de la délivrance du brevet:
**21.08.2019 Bulletin 2019/34**

(51) Int Cl.:
***H02S 50/10*** *(2014.01)*

(21) Numéro de dépôt: **17194471.3**

(22) Date de dépôt: **02.10.2017**

(54) **PROCÉDÉ DE SURVEILLANCE ET DE DIAGNOSTIC D'UNE ARCHITECTURE PHOTOVOLTAÏQUE**

VERFAHREN ZUR ÜBERWACHUNG UND DIAGNOSE EINER FOTOVOLTAIK-ARCHITEKTUR

METHOD FOR MONITORING AND DIAGNOSING A PHOTOVOLTAIC ARCHITECTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2016 FR 1659633**

(43) Date de publication de la demande:
**11.04.2018 Bulletin 2018/15**

(73) Titulaire: **COMMISSARIAT À L'ÉNERGIE ATOMIQUE ET AUX ÉNERGIES ALTERNATIVES 75015 Paris (FR)**

(72) Inventeurs:
• **AL SHAKARCHI, Franck 73160 SAINT-SULPICE (FR)**
• **PLISSONNIER, Alexandre 38800 PONT-DE-CLAIX (FR)**

(74) Mandataire: **GIE Innovation Competence Group 310, avenue Berthelot 69372 Lyon Cedex 08 (FR)**

(56) Documents cités:
**EP-A1- 2 998 756     WO-A1-2015/118608**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique de l'invention**

La présente invention se rapporte à un procédé de surveillance et de diagnostic d'une architecture photovoltaïque.

**Etat de la technique**

Une architecture photovoltaïque comporte en règle générale plusieurs chaînes de modules photovoltaïques (appelés également panneaux photovoltaïques ou panneaux solaires) connectées en parallèle. Dans chaque chaîne, les modules photovoltaïques sont connectés en série. Chaque module photovoltaïque comporte plusieurs cellules photovoltaïques connectées en série, sous forme de rangées de cellules. Chaque cellule photovoltaïque est destinée à convertir une énergie solaire en une énergie électrique. Les chaînes de modules photovoltaïques sont reliées à un convertisseur, par exemple un onduleur. Ce convertisseur permet de convertir la tension continue fournie par chaque chaîne de modules en une tension alternative. Le rôle du convertisseur est également de déterminer un point de fonctionnement pour lequel la puissance délivrée par une chaîne de modules photovoltaïque est maximale (point de fonctionnement maximal désigné MPP pour "Maximum Power Point"). Les documents EP 2 998 756A et WO 2015/118608A décrivent des procédés de diagnostic d'une architecture photovoltaïque.

La présence d'un défaut dans une chaîne de modules photovoltaïques handicape la production d'électricité de toute la chaîne et donc de toute l'architecture de production d'électricité.

Il est donc nécessaire de surveiller l'état de fonctionnement de chaque module photovoltaïque d'une chaîne afin de repérer un éventuel défaut au niveau d'un module et d'y pallier le plus rapidement possible. Selon les cas, le défaut pourra être de différentes natures, notamment permanent s'il s'agit d'un problème matériel ou temporaire s'il s'agit par exemple de la présence d'un ombrage ou d'une poussière sur le module.

Il existe différentes solutions pour surveiller l'état de fonctionnement d'un module photovoltaïque. Certaines solutions utilisent des capteurs de courant et de tension pour vérifier le comportement électrique du module. D'autres solutions utilisent des caméras thermiques pour repérer des éventuels points chauds sur les modules après une stimulation électrique. Enfin des solutions utilisent des capteurs de température. C'est le cas par exemple du brevet US6512458B1 et de la demande US2011/088744A1 qui décrivent des solutions dans lesquelles des capteurs de température sont destinés à mesurer la température au niveau des diodes de contournement pour en déduire un éventuel défaut au niveau des cellules contournées. La demande de brevet US2011/316343A1 décrit pour sa part un module photovoltaïque comportant plusieurs cellules interconnectées dans laquelle chaque cellule est associée à une unité de contrôle qui comporte un capteur de puissance et un capteur de température pour surveiller l'intégrité de la cellule.

Les solutions de détection par imagerie thermique sont trop contraignantes et peu fiables, notamment pour détecter des défauts temporaires ou intermittents. Par ailleurs, les solutions qui utilisent des capteurs de températures intégrés au module, comme dans la demande de brevet US2011/316343A1, ne sont pas suffisamment abouties et ne permettent pas d'effectuer simplement un diagnostic sur l'état de chaque cellule du module.

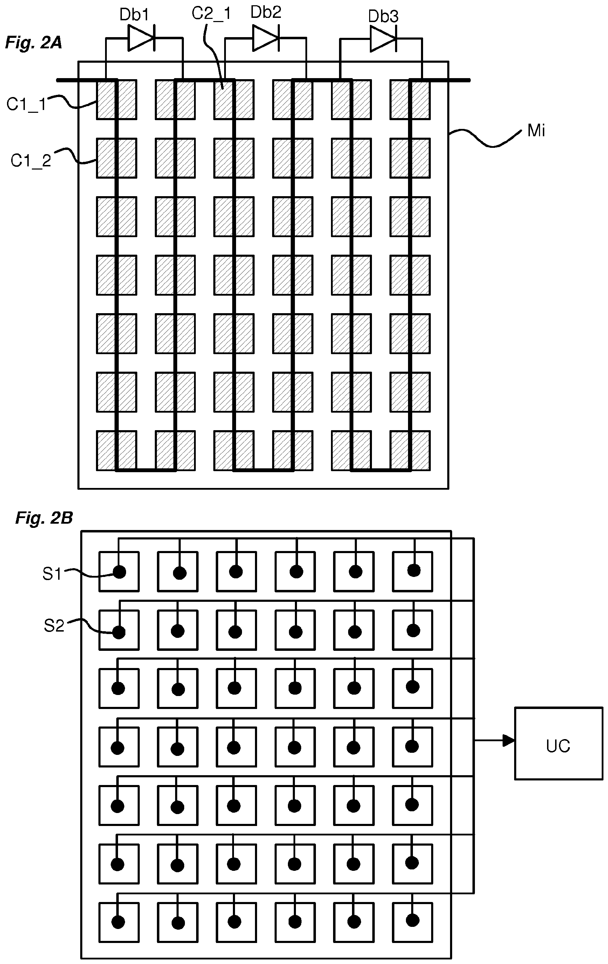

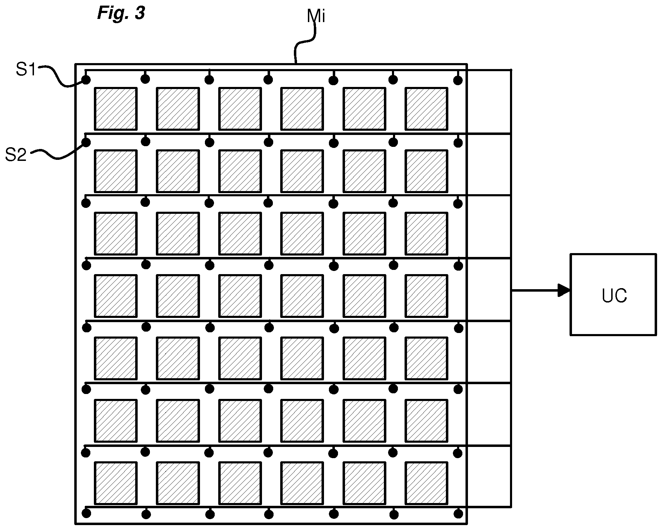

Le document EP2998756A1 décrit une méthode d'évaluation d'un niveau de performance d'un module photovoltaïque comportant plusieurs cellules photovoltaïques. Pour cela, la méthode s'appuie notamment sur un modèle thermique d'une cellule photovoltaïque (figure 2). Les courbes représentées sur la figure 3 permettent d'illustrer la fiabilité du modèle utilisé.

Le document WO2015/118608 décrit une méthode de détermination de défauts dans un système photovoltaïque. La méthode est basée sur la courbe I-V d'une cellule photovoltaïque.

Le but de l'invention est de proposer un procédé de surveillance et de diagnostic d'une architecture photovoltaïque qui permet un diagnostic simple de l'état des cellules photovoltaïques d'un module et donc du module incorporant lesdites cellules.

**Exposé de l'invention**

Ce but est atteint par un procédé de surveillance et de diagnostic d'une architecture photovoltaïque, ladite architecture comportant plusieurs chaînes de modules photovoltaïques connectées en parallèle, chaque chaîne de modules photovoltaïques comportant plusieurs modules photovoltaïques connectés en série, chaque module photovoltaïque comportant plusieurs cellules photovoltaïques connectées en série, ladite architecture comportant des diodes de contournement pour contourner chacune une ou plusieurs cellules du module si une cellule est en défaut. Pour au moins un module photovoltaïque, le procédé comporte les étapes suivantes :

- Acquisition de plusieurs valeurs de température pour chaque cellule dudit module au cours du temps, de manière à former pour chaque cellule un profil de température en fonction du temps,

- Détermination d'une valeur de température de référence d'une cellule à partir des valeurs de température acquises,
- Pour un profil de température d'une cellule du module, comparaison d'une valeur de température acquise avec ladite valeur de température de référence de manière à déterminer un écart de température,
- Détermination de l'état de fonctionnement de chaque cellule par comparaison dudit écart de température déterminé avec une valeur seuil mémorisée.

Les étapes définies ci-dessus sont notamment parfaitement innovantes car permettant de réaliser un suivi et un diagnostic d'un module photovoltaïque en se basant sur des mesures de température. Contrairement à la solution du document EP2998756A1 cité ci-dessus, il ne s'agit pas de simplement construire un modèle et de vérifier la fiabilité de ce modèle.

Selon une particularité, l'étape de détermination de l'état de fonctionnement de la cellule comporte une étape de détermination du type de défaut par comparaison avec plusieurs profils de température mémorisés, correspondant chacun à un type de défaut déterminé.

Selon une autre particularité, le procédé comporte une étape de détermination d'un modèle prédictif d'apparition de défaut lorsqu'un défaut sur une ou plusieurs cellules du module est détecté de manière récurrente au cours du temps.

Selon une autre particularité, le procédé comporte une étape de détermination des pertes de puissance du module en fonction du temps.

Selon une autre particularité, le procédé comporte une étape de détermination des pertes de puissance de chaque chaîne de l'architecture photovoltaïque en fonction du temps.

Selon une autre particularité, le procédé comporte, pour chaque diode de contournement du module, une étape d'acquisition de valeurs de température de la diode de contournement de manière à former un profil de température en fonction du temps.

Selon une autre particularité, le procédé comporte une étape de détermination d'une valeur de température de référence à partir des valeurs de température acquises pour les diodes de contournement du module.

Selon une autre particularité, le procédé comporte :

- Une étape de comparaison d'une valeur de température acquise pour une diode de contournement avec ladite valeur de température de référence de manière à déterminer un écart de température,
- Une étape de détermination de l'état de fonctionnement de la diode de contournement par comparaison dudit écart de température déterminé avec une valeur seuil mémorisée.

Selon une autre particularité, le procédé comporte une étape de détermination des pertes de puissance de chaque chaîne de l'architecture photovoltaïque en fonction du temps.

Selon une autre particularité, le procédé comporte une étape de détermination d'une valeur de courant contourné par une diode de contournement à un instant donné à partir des caractéristiques électriques de ladite diode et de la puissance thermique dégagée par la diode, ladite puissance thermique dégagée étant fonction de la valeur de température de la diode audit instant, de la valeur de la température ambiante audit instant et de la résistance thermique de la diode.

Selon une autre particularité, le procédé comporte une étape de surveillance de l'état de fonctionnement d'une diode de contournement en fonction de sa température et du courant qui la traverse au cours du temps.

L'invention concerne également un système de surveillance et de diagnostic d'une architecture photovoltaïque, ladite architecture comportant plusieurs chaînes de modules photovoltaïques connectées en parallèle, chaque chaîne de modules photovoltaïques comportant plusieurs modules photovoltaïques connectés en série, chaque module photovoltaïque comportant plusieurs cellules photovoltaïques connectées en série, ladite architecture comportant des diodes de contournement pour contourner chacune une ou plusieurs cellules du module si une cellule était en défaut, ledit système comportant :

- Un module d'acquisition de plusieurs valeurs de température pour chaque cellule dudit module au cours du temps, de manière à former pour chaque cellule un profil de température en fonction du temps,
- Un module de détermination d'une valeur de température de référence d'une cellule à partir des valeurs de température acquises,
- Pour un profil de température d'une cellule du module, un module de comparaison d'une valeur de température acquise avec ladite valeur de température de référence de manière à déterminer un écart de température,
- Un module de détermination de l'état de fonctionnement de chaque cellule par comparaison dudit écart de température déterminé avec une valeur seuil mémorisée.

Selon une particularité, le module de détermination de l'état de fonctionnement de la cellule comporte un module de détermination du type de défaut par comparaison avec plusieurs profils de température mémorisés, correspondant chacun à un type de défaut déterminé.

Selon une autre particularité, le système comporte un module de détermination d'un modèle prédictif d'apparition de défaut lorsqu'un défaut sur une ou plusieurs cellules du module est détecté de manière récurrente au cours du temps.

Selon une autre particularité, le système comporte un module de détermination des pertes de puissance du module en fonction du temps.

Selon une autre particularité, le système comporte un module de détermination des pertes de puissance de chaque chaîne de l'architecture photovoltaïque en fonction du temps.

Selon une autre particularité, le système comporte, pour chaque diode de contournement du module, un module d'acquisition de valeurs de température de la diode de contournement de manière à former un profil de température en fonction du temps.

Selon une autre particularité, le système comporte un module de détermination d'une valeur de température de référence à partir des valeurs de température acquises pour les diodes de contournement du module.

Selon une autre particularité, le système comporte :

- Un module de comparaison d'une valeur de température acquise pour une diode de contournement avec ladite valeur de température de référence de manière à déterminer un écart de température,
- Un module de détermination de l'état de fonctionnement de la diode de contournement par comparaison dudit écart de température déterminé avec une valeur seuil mémorisée.

Selon une autre particularité, le système comporte un module de détermination des pertes de puissance de chaque chaîne de l'architecture photovoltaïque en fonction du temps.

Selon une autre particularité, le système comporte un module de détermination d'une valeur de courant contourné par une diode de contournement à un instant donné à partir des caractéristiques électriques de ladite diode et de la puissance thermique dégagée par la diode, ladite puissance thermique dégagée étant fonction de la valeur de température de la diode audit instant, de la valeur de la température ambiante audit instant et de la résistance thermique de la diode.

Selon une autre particularité, le système comporte un module de surveillance de l'état de fonctionnement d'une diode de contournement en fonction de sa température et du courant qui la traverse au cours du temps.

**Brève description des figures**

D'autres caractéristiques et avantages vont apparaître dans la description détaillée qui suit faite en regard des dessins annexés dans lesquels :

- La figure 1 représente de manière schématique une architecture photovoltaïque.
- Les figures 2A et 2B représentent de manière schématique un module photovoltaïque vu respectivement du côté de sa face avant et de sa face arrière et illustrant le principe de mesure de température au niveau des cellules du module.
- La figure 3 représente une variante de réalisation du principe de mesure de température au niveau des cellules du module.
- La figure 4 représente un diagramme de fonctionnement illustrant les différentes étapes du procédé de surveillance de l'invention.
- La figure 5 illustre le principe de mesure des températures au niveau des diodes de contournement employées dans un module photovoltaïque.
- La figure 6 représente un diagramme de fonctionnement illustrant des étapes complémentaires du procédé de surveillance de l'invention.
- Les figures 7A à 7C montrent trois profils distincts de modules en défaut.

**Description détaillée d'au moins un mode de réalisation**

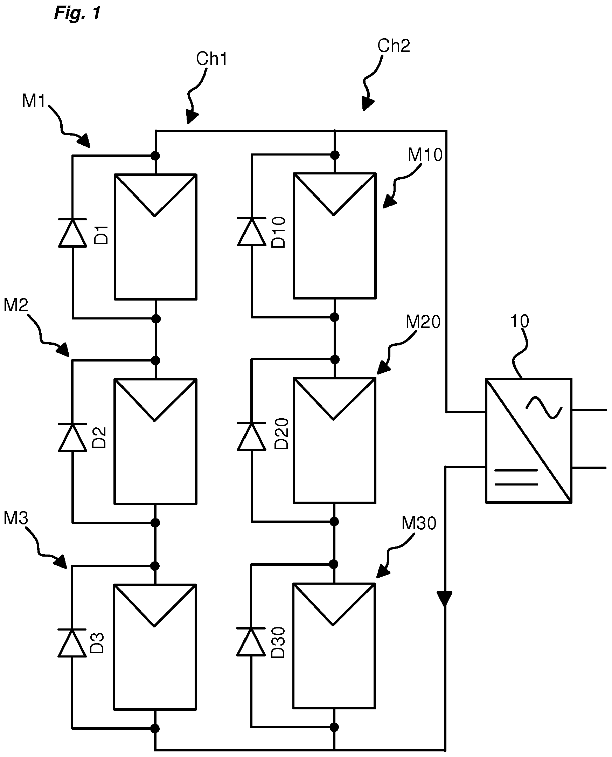

En référence à la figure 1, une architecture photovoltaïque présente classiquement les particularités d'agencement et de fonctionnement suivantes :

- Plusieurs chaînes Ch1, Ch2 de modules photovoltaïques (appelés également panneaux photovoltaïques ou panneaux solaires) sont connectées en parallèle (deux chaînes sur la figure 1).
- Chaque chaîne de modules photovoltaïques comporte plusieurs modules photovoltaïques connectés en série (M1-M3 pour la chaine Ch1 et M10-M30 pour la chaîne Ch2).

- Un module photovoltaïque (référencé de manière générale Mi dans la suite du texte) comporte plusieurs cellules photovoltaïques (non représentées) connectées en série. Les cellules photovoltaïques sont réparties en plusieurs rangées.
- Chaque cellule photovoltaïque est destinée à convertir une énergie solaire en une énergie électrique.
- Un convertisseur, par exemple un onduleur 10, comportant plusieurs bras de commutation à base de transistors, est destiné à convertir une tension continue fournie par chaque chaîne de modules en une tension alternative.
- Des moyens de commande, intégrés ou non au convertisseur, sont aptes à commander l'onduleur pour effectuer la conversion de tension.
- Chaque module comporte avantageusement des diodes anti-retours (non représentées) positionnées de manière adaptée, par exemple en série avec les modules de chaque chaîne.
- Chaque module comporte avantageusement des diodes de contournement (dites de "bypass") pour contourner chacune une rangée de cellules distinctes d'un module si une cellule de cette rangée était en défaut. Sur la figure 1, une diode de contournement est représentée par module (les diodes sont référencées D1, D2, D3, D10, D20, D30 sur la figure 1).

En référence à la figure 2A, dans chaque module, on a l'agencement suivant :

- Les cellules photovoltaïques sont organisées en plusieurs rangées. Sur la figure 2A deux colonnes de cellules forment une rangée de cellules. Sur cette figure, la cellule référencée C1_1 correspond à la première cellule de la première rangée et la cellule référencée C1_2 correspond à la deuxième cellule de la première rangée. La cellule référencée C2_1 correspond à la première cellule de la deuxième rangée. Dans la suite de la description, chaque cellule est référencée de manière générale, Cx, avec x correspondant à la référence de la cellule.

Le procédé de surveillance et de diagnostic de l'invention est destiné à surveiller l'état d'un module photovoltaïque Mi par la mesure de la température, préférentiellement au niveau de chaque cellule Cx de ce module Mi et à effectuer un diagnostic sur l'état de la cellule et/ou du module à partir de cette surveillance.

Pour mettre en oeuvre ce procédé de surveillance et de diagnostic, le système de surveillance de l'invention comporte un dispositif de mesure de température associé à chaque cellule d'un module et destiné à mesurer la température de la cellule à laquelle il est associé.

Chaque dispositif de mesure de température comporte :

- Un capteur de température (référencé S1, S2 et Sx de manière générale) analogique ou numérique positionné au plus près de la cellule Cx ;

- Des moyens de conversion analogique/numérique pour convertir le signal analogique fourni par le capteur si celui-ci est analogique ;

- Une interface de communication agencée pour transmettre les données de mesure vers une unité de traitement ;

- Un module d'alimentation électrique pour alimenter le dispositif.

Les moyens de conversion, l'interface de communication et le module d'alimentation pourront être communs à plusieurs dispositifs.

Les différents composants des dispositifs de mesure de température pourront être organisés selon plusieurs configurations. Chaque capteur de température Sx est localisé au plus près d'une cellule Cx de manière à capter de manière précise la température de la cellule, alors que les autres composants du dispositif peuvent être déportés par rapport au capteur.

De manière non limitative, chaque capteur de température Sx peut être agencé selon différentes configurations :

- Il peut être fixé sur la face arrière de la cellule (figure 2B), ou

- Il peut être encapsulé dans le module de manière à être positionné entre des cellules et pris entre les deux faces d'un module (figure 3).

De manière non limitative, chaque capteur de température Sx se présentera par exemple sous la forme d'un thermomètre à résistance de platine (RTD) PT100 ayant une précision d'au moins 0.1°C sur une plage de température allant de 0°C à 100°C.

Les mesures de température au niveau de plusieurs cellules d'un module sont avantageusement synchronisées entre elles. Pour cela, toute méthode de synchronisation connue pourra être employée. Celle-ci sera mise en oeuvre par l'unité de traitement UC du système.

Le système de surveillance comporte en effet au moins une unité de traitement UC destinée à acquérir et traiter les données de températures fournies par chaque dispositif de mesure de température. L'unité de traitement UC pourra être associée à un module Mi en particulier, à un ensemble de modules, par exemple une chaîne de modules, ou à l'architecture photovoltaïque complète.

Le système de surveillance comporte plusieurs modules logiciels destinés à être exécutés par l'unité de traitement UC pour mettre en oeuvre le procédé de surveillance de l'invention.

L'unité de traitement UC comporte au moins un microprocesseur et une mémoire agencés pour exécuter lesdits modules logiciels.

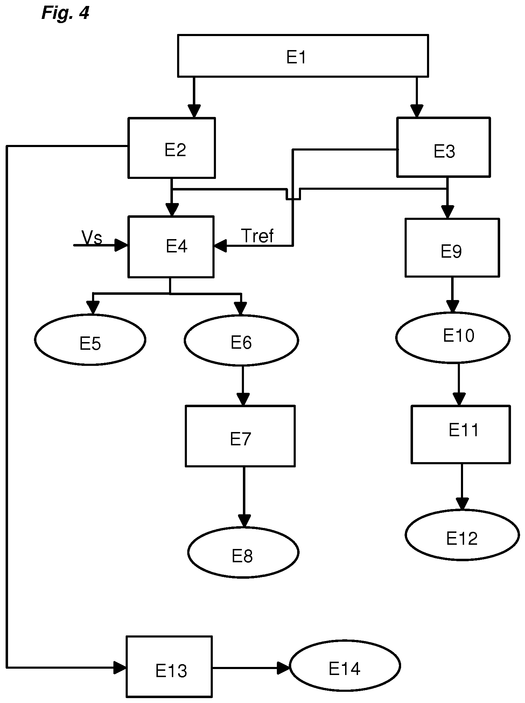

En référence à la figure 4, pour un module photovoltaïque Mi d'une architecture, le procédé de surveillance de l'invention comporte les étapes suivantes :

- Pour chaque cellule du module, les températures sont mesurées au cours du temps par le dispositif de mesure et sont envoyées à intervalles, préférentiellement réguliers, vers l'unité de traitement UC (étape E1). L'unité de traitement UC acquiert ainsi en continu les valeurs de température émises par chaque capteur de température.

- L'unité de traitement UC peut ainsi exécuter un module logiciel pour reconstituer le profil de variation de la température de la cellule en fonction du temps (étape E2) ;

- L'unité de traitement UC exécute un module de comparaison de la température mesurée à chaque instant au niveau de chaque cellule Cx avec une température de référence Tref (étape E4) qui est préalablement déterminée par l'unité de traitement (étape E3) ;

- Cette température de référence Tref correspond avantageusement à la température de la majorité des cellules du module audit instant de mesure des températures. En variante, la température de référence peut correspondre à la température homogène au sein d'un module la plus commune parmi plusieurs modules ou la température la plus basse. Pour la déterminer, l'unité de traitement met avantageusement en oeuvre une analyse statistique sur les valeurs de température obtenues audit instant pour chaque cellule du module. L'analyse statistique réalisée sera par exemple mise en oeuvre sur plusieurs rangées de cellules et même sur une ou plusieurs chaînes de modules. L'analyse statistique étant classique, elle n'est pas détaillée dans la présente demande. Il faut simplement tenir compte d'une sélection d'une température de référence parmi les températures de plusieurs cellules. La température de référence suit donc un profil de température déterminée au cours du temps.

- Le module de comparaison est exécuté pour comparer la température Ti mesurée à chaque instant au cours du temps au niveau d'une cellule Cx avec la température de référence Tref correspondante audit instant. Le module de comparaison compare ensuite la différence entre la température mesurée et la température de référence audit instant par rapport à une valeur seuil pré-mémorisée Vs. La valeur seuil Vs correspond par exemple au double de l'erreur de mesure.

  ◦ Si la différence entre les deux températures est inférieure ou égale à ladite valeur seuil Vs, l'unité de traitement UC conclut à l'absence de défaut (étape E5).

  ◦ Si la différence entre les deux températures est supérieure à la valeur seuil Vs, l'unité de traitement UC conclut en la présence d'un défaut (étape E6).

- Lorsque la présence d'un défaut est détectée, l'unité de traitement UC est agencée pour déterminer le type de défaut (étape E7). Pour cela, l'unité de traitement UC exécute un module de détermination du type de défaut.

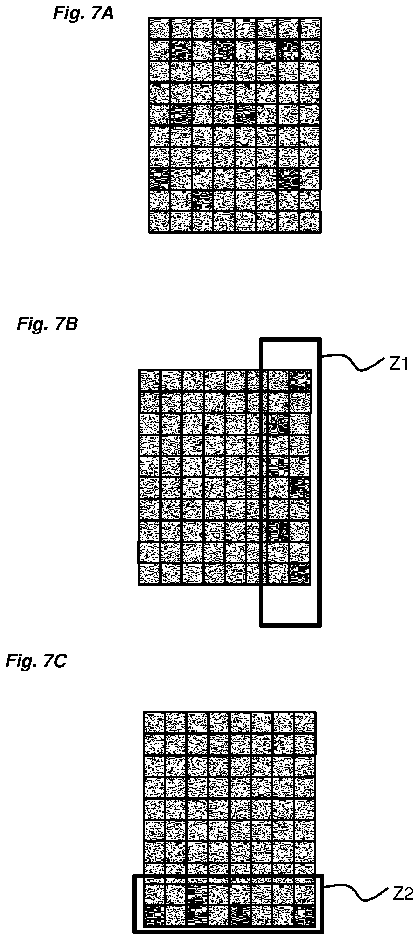

Ce module de détermination du type de défaut est agencé pour raisonner à la fois dans l'espace et dans le temps. Plus précisément, à chaque instant de mesure de température, il est agencé pour reconstituer une image en température du module, c'est-à-dire une image du module dans laquelle chaque cellule est illustrée par son niveau de température. Le module de détermination est agencé pour comparer cette image en température du module à des images pré-mémorisées dans les moyens de mémorisation de l'unité de traitement UC. De manière non limitative, les figures 7A à 7C illustrent différents cas de défauts pouvant apparaître sur un module photovoltaïque.

Il sera alors capable de distinguer les défauts suivants :

  ◦ Cellule isolée présentant une température anormalement élevée, synonyme d'un défaut localisé au niveau de la cellule Cx. Il s'agira par exemple d'une cellule cassée, de la présence d'un ombrage ou d'une salissure localisée, d'une perte de transparence de la cellule (figure 7A).

◦ Rangée de cellules Cx présentant une température anormalement élevée, synonyme d'un défaut au niveau de la diode de contournement associée à cette rangée ou d'un problème de connexion électrique telle que la présence d'un circuit ouvert sur la rangée (zone Z1 - figure 7B).

◦ Présence de cellules présentant une température anormalement élevée sur tout le bas du cadre d'un module, synonyme d'un problème de polarisation ou de Dégradation Potentielle Induite (dénommée PID) (zone Z2 - figure 7C).

En outre, dans le temps, le module de détermination est agencé pour suivre l'évolution de l'image en température du module dans le temps, en vue de confirmer éventuellement la présence d'un défaut et de déterminer éventuellement la nature du défaut. Il s'agira par exemple de :

◦ La présence d'une ou plusieurs cellules Cx ayant une température anormalement élevée sur une plage de durée limitée, toujours identique d'une journée à l'autre, synonyme d'un défaut localisé temporellement, de type ombrage récurrent.

La comparaison instantanée en température permet d'alerter l'unité de traitement UC de la présence d'un éventuel défaut. Le type de défaut ne peut ensuite être déterminé qu'après une analyse spatiale pour vérifier si d'autres cellules du module sont affectées et après une analyse temporelle pour vérifier si le défaut perdure dans le temps ou s'il revient de manière récurrente sur une plage de durée de surveillance déterminée, cette plage pouvant être plus ou moins longue. Une fois le type de défaut déterminé, l'unité de traitement UC émet une sortie correspondante (étape E8). Il peut s'agir notamment de l'émission d'un message d'alerte.

Outre la détection de défauts, l'unité de traitement UC peut être destinée à effectuer d'autres tâches à partir des données de température recueillies.

Le système comporte avantageusement un module de calcul des pertes de puissance par module photovoltaïque en fonction du temps (étape E9). Ce module de calcul des pertes de puissance fonctionne en estimant la température normale du module ciblé sur une période donnée (pouvant aller d'une semaine à plusieurs mois). Cette estimation est mise en oeuvre à partir de formules issues de la mécanique thermique, des caractéristiques thermiques/électriques du module ciblé et des conditions pires cas sur la période de surveillance. Puis le module de calcul détermine la température de référence maximale du module photovoltaïque sur la même période de surveillance. Le module de calcul peut ainsi calculer les pertes de puissance du module en fonction du temps (étape E10). L'augmentation progressive de cette température de référence montre une dégradation progressive du module.

Le système comporte avantageusement un module de détermination d'un modèle prédictif d'évolution des défauts en fonction du temps (étape E11). Ce modèle de détermination s'appuie notamment sur l'évolution de la température d'une cellule au cours du temps. Plus une cellule est vieille, plus elle aura tendance à chauffer et donc plus elle aura de chances de subir une défaillance. Grâce au modèle construit, l'unité de traitement sera à même de prévoir l'apparition de défauts sur toutes les cellules des modules d'une architecture (étape E12).

Enfin, à partir de l'ensemble des données recueillies sur les modules d'une chaîne de modules, le système comporte avantageusement un module de calcul des pertes de puissance par chaîne de modules en fonction du temps (étapes E13 et E14), tenant compte de l'architecture photovoltaïque surveillée.

Pour bien comprendre le principe de fonctionnement de ce dernier module de calcul, il faut rappeler que la puissance solaire reçue par une cellule photovoltaïque se transforme en deux types de puissance : puissance électrique et puissance thermique.

La puissance thermique émise par la cellule a pour conséquence d'augmenter la température de la cellule. L'expression de la puissance thermique émise par une cellule est la suivante :

$$Pth = (Tcell - Tamb)/Rth$$

Dans laquelle :

- Pth correspond à la puissance thermique émise par la cellule ;
- Rth correspond à la résistance thermique de la cellule ;
- Tcell correspond à la température de la cellule et ;
- Tamb correspond à la température ambiante de l'environnement du module photovoltaïque.

En connaissant la résistance thermique de la cellule et en mesurant sa température, il est ainsi possible de comparer la puissance thermique émise par cette cellule à la puissance thermique émise par la meilleure cellule identifiée, c'est-à-dire par exemple celle qui dispose de la plus faible température. A partir de la différence de puissance thermique entre ces deux cellules, on en déduit la perte de puissance électrique transmise par la cellule.

Autrement dit, le raisonnement mathématique est le suivant :

- On suppose que toutes les cellules reçoivent la même puissance totale (irradiance solaire) et que leurs résistances thermiques sont identiques.
- L'indice Cell_NOK fait référence à une cellule défaillante et l'indice Cell_OK fait référence à la cellule performante.
- On suppose que $G_{Cell\_NOK} = G_{Cell\_OK}$ avec G représentant l'irradiance reçue par les cellules.

Il est connu que, pour chaque cellule, l'irradiance G se transforme à la fois en puissance électrique et en puissance thermique, selon la relation :

$$G = Pelec + Pth$$

Où Pelec et Pth sont respectivement les puissances électriques et thermiques générées par la cellule.

La différence de puissance électrique transmise entre la cellule défaillante et la cellule performante s'exprime par la relation suivante :

$$\Delta Pelec = Pelec_{Cell\_OK} - Pelec_{Cell\_NOK} = Pth_{Cell\_NOK} - Pth_{Cell\_OK}$$

Avec :

- $PeleC_{Cell\_OK}$ la puissance électrique transmise par la cellule performante ;
- $PeleC_{Cell\_NOK}$ la puissance électrique transmise par la cellule défaillante ;
- $Pth_{Cell\_OK}$ la puissance thermique transmise par la cellule performante ;
- $Pth_{Cell-NOK}$ la puissance thermique transmise par la cellule défaillante.

Or, on a :

$$Pth = (Tcell - Tamb)/Rth$$

On obtient alors :

$$\Delta Pelec = \frac{Tcell_{NOK} - Tamb}{Rth} - \frac{Tcell_{OK} - Tamb}{Rth} = \frac{Tcell_{NOK} - Tcell_{OK}}{Rth}$$

Le choix de la température de la cellule performante pourra différer selon que l'on se place en instantané ou en absolu.

Les pertes de puissance électrique au niveau d'un module seront déterminées par la somme des pertes de puissance électrique de chaque cellule du module.

En parallèle ou en complément, le système de surveillance de l'invention est avantageusement destiné à surveiller la température de chaque diode de contournement (Db1, Db2...) employée dans un module photovoltaïque.

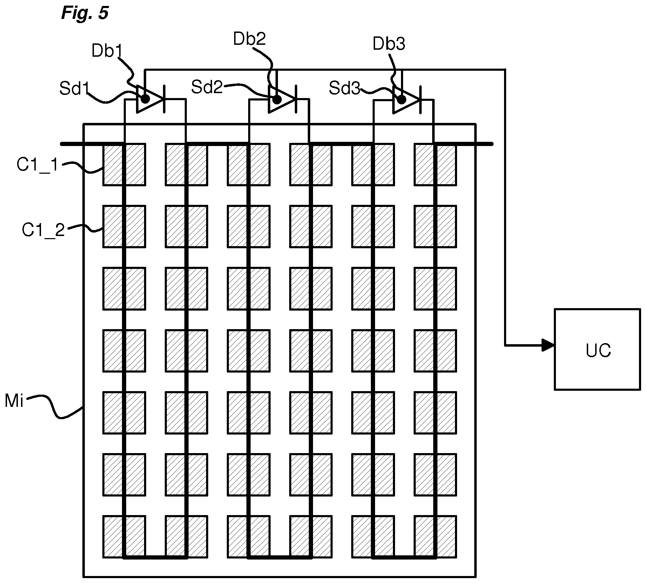

Le système comporte ainsi des dispositifs de mesure de température, du type de ceux déjà décrits ci-dessus, associés chacun à une diode de contournement distincte d'une rangée de cellules du module. L'implantation de tels dispositifs de mesure de température dans des diodes est bien connue et ne fait pas l'objet de la présente invention. On retiendra que les capteurs de température Sd1, Sd2, Sd3 employés sont par exemple encapsulés dans le boîtier de la diode. Le principe est illustré par la figure 5 où l'on voit que les capteurs de température Sd1, Sd2, Sd3 envoient les valeurs de température mesurées au niveau de chaque diode de contournement vers l'unité de traitement UC.

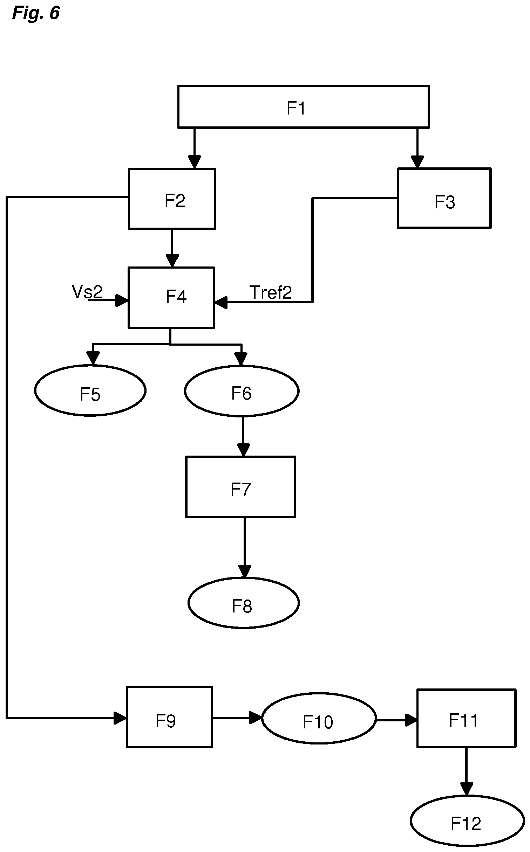

Le diagramme de fonctionnement est représenté sur la figure 6.

- Pour chaque diode de contournement du module, les températures sont mesurées au cours du temps par le dispositif de mesure et sont envoyées à intervalles, réguliers ou non, vers l'unité de traitement (étape F1). L'unité de traitement UC acquiert ainsi en continu les valeurs de température émises par chaque capteur.

- L'unité de traitement UC exécute un module logiciel pour reconstituer le profil de variation de la température de la diode en fonction du temps (étape F2) ;

- L'unité de traitement UC exécute un module de comparaison de la température mesurée à chaque instant au niveau d'une ou plusieurs diodes de contournement avec une température de référence Tref2 (étape F4) qui est préalablement déterminée par l'unité de traitement (étape F3).

- Cette température de référence Tref2 correspond avantageusement à la température minimale des diodes de contournement du module audit instant de mesure des températures, celle-ci devant être proche de la température ambiante. En effet, si une rangée de cellules n'est pas en défaut et donc non contournée, aucun courant ne doit passer par la diode de contournement et celle-ci doit donc conserver une température basse, proche de la température ambiante.

- Le module de comparaison est exécuté pour comparer la température mesurée à chaque instant au cours du temps au niveau d'une diode de contournement avec la température de référence Tref2 correspondante audit instant. Le module de comparaison compare ensuite la différence entre la température mesurée et la température de référence Tref2 audit instant par rapport à une valeur seuil pré-mémorisée Vs2. La valeur seuil Vs2 correspond par exemple au double de l'erreur de mesure.

  ◦ Si la différence entre les deux températures est inférieure ou égale à ladite valeur seuil Vs2, l'unité de traitement UC conclut à l'absence de défaut au niveau de la rangée de cellules contournée par la diode ciblée (étape F5).

  ◦ Si la différence entre les deux températures est supérieure à la valeur seuil Vs2, l'unité de traitement UC conclut en la présence d'un défaut au niveau de la rangée de cellules contournée par la diode ciblée (étape F6).

Certains défauts peuvent affecter une ou plusieurs cellules en même temps et peuvent être localisés dans le temps, intermittents ou permanents. Il s'agira par exemple d'une ou plusieurs cellules de la rangée cassée, de la présence d'un ombrage ou d'une salissure localisée, d'une perte de transparence d'une cellule de la rangée. Comme pour l'analyse des températures au niveau des cellules, la comparaison instantanée en température permet d'alerter l'unité de traitement de la présence d'un éventuel défaut. Le type de défaut ne peut ensuite être déterminé qu'après une analyse spatiale pour vérifier si des alertes sont également présentes au même instant au niveau d'autres diodes du module et après une analyse temporelle pour vérifier si le défaut perdure dans le temps ou s'il revient de manière récurrente sur une plage de durée de surveillance déterminée, cette plage pouvant être plus ou moins longue (étape F7). Une fois le type de défaut déterminé, l'unité de traitement UC émet une sortie correspondante (étape F8). Il peut s'agir notamment de l'émission d'un message d'alerte.

Par ailleurs le système peut comporter avantageusement un module de détermination du courant qui traverse la diode de contournement (étape F9). Pour cela, le module se base sur l'expression suivante de la puissance électrique dégagée en puissance thermique par la diode :

$$Pelec = Vseuil \times Idiode + Rdiode \times Idiode^2$$

Pth = Pelec

Dans laquelle :

- Pth correspond à la puissance thermique dégagée par la diode de contournement, cette puissance thermique étant égale à :
  ◦ Pth = ΔT/Rth avec ΔT qui correspond à la différence de température entre la température mesurée au niveau de la diode et la température ambiante de l'environnement de la diode (mesurée à l'aide d'un capteur supplémentaire) et Rth la résistance thermique de la diode.
- Vseuil correspond à la tension de seuil connue de la diode ;
- Idiode correspond au courant de contournement qui traverse la diode ;
- Rdiode correspond à la résistance dynamique connue de la diode ;

A partir de ces informations, l'unité de traitement UC détermine le courant Idiode qui traverse la diode (étape F10). Le système est ainsi à même de suivre l'évolution de ce courant en fonction de l'évolution de la température de la diode.

Le système peut avantageusement comporter un module de détermination du courant qui traverse la rangée de cellules contournée par la diode ciblée (étape F11). Ce courant est obtenu en sortie (étape F12) à partir de l'expression suivante :

$$Irang\acute{e}e = Icha\hat{\imath}ne - Idiode$$

Dans laquelle :

- Irangée correspond au courant qui traverse la rangée de cellules ;
- Ichaîne correspond au courant de la chaîne de modules photovoltaïques ;
- Idiode le courant de contournement passant par la diode de contournement de la rangée de cellules lorsqu'une ou plusieurs cellules de la rangée présente un défaut ;

En fonction de l'évolution du courant qui traverse la diode au cours du temps et de l'évolution de sa température, il est possible de prévoir l'évolution de la dégradation de la diode et donc l'apparition d'un défaut.

Comme pour la mesure des températures au niveau des cellules, le système peut avantageusement comporter un module de calcul des pertes de puissance par chaîne de modules en fonction du temps. Lorsqu'une diode est activée, la puissance électrique fournie par la rangée de cellules contournée par cette diode est perdue car la tension aux bornes de la rangée est nulle. Il est ainsi possible d'estimer la puissance électrique perdue dans un module en tenant compte du rapport entre le nombre de diodes de contournement qui sont activées et le nombre total de diodes de contournement. La puissance électrique perdue liée à l'activation des diodes dans un module (ou même à l'échelle d'une chaîne de modules) s'exprime donc par la relation suivante :

$$Pelec_{los} = Ndiodes_{ON} \times Irang\acute{e}e \times Vrang\acute{e}e$$

Dans laquelle :

- $Pelec_{los}$ correspond à la puissance électrique perdue sur une rangée de cellules,

- $Ndiodes_{ON}$ correspond au nombre de diodes activées dans la rangée de cellules,

- Irangée correspond au courant circulant dans la rangée de cellules,

- Vrangée correspond à la tension aux bornes de la rangée de cellules.

Il ressort de ce qui précède que la solution de l'invention comporte ainsi de nombreux avantages, parmi lesquels :

- Capacité de détection de tous les défauts, qu'ils soient localisés temporellement ou intermittents.

- Facilité de détection grâce à de simples comparaisons.

- Solution non intrusive dans le fonctionnement en production de l'architecture photovoltaïque.

## Revendications

1. Procédé de surveillance et de diagnostic d'une architecture photovoltaïque, ladite architecture comportant plusieurs chaînes (Ch1, Ch2) de modules photovoltaïques (Mi) connectées en parallèle, chaque chaîne de modules photovoltaïques comportant plusieurs modules photovoltaïques connectés en série, chaque module photovoltaïque comportant plusieurs cellules photovoltaïques (Cx) connectées en série, ladite architecture comportant des diodes de contournement pour contourner chacune une ou plusieurs cellules du module si une cellule est en défaut, ledit procédé étant **caractérisé en ce que**, pour au moins un module photovoltaïque, il comporte les étapes suivantes :

- Acquisition de plusieurs valeurs de température pour chaque cellule (Cx) dudit module au cours du temps, de manière à former pour chaque cellule un profil de température en fonction du temps,
- Détermination d'une valeur de température de référence (Tref) d'une cellule à partir des valeurs de température acquises,
- Pour un profil de température d'une cellule du module, comparaison d'une valeur de température acquise avec ladite valeur de température de référence de manière à déterminer un écart de température,
- Détermination de l'état de fonctionnement de chaque cellule par comparaison dudit écart de température déterminé avec une valeur seuil (Vs) mémorisée.

2. Procédé selon la revendication 1, **caractérisé en ce que** l'étape de détermination de l'état de fonctionnement de la cellule comporte une étape de détermination du type de défaut par comparaison avec plusieurs profils de température mémorisés, correspondant chacun à un type de défaut déterminé.

3. Procédé selon la revendication 2, **caractérisé en ce qu'**il comporte une étape de détermination d'un modèle prédictif d'apparition de défaut lorsqu'un défaut sur une ou plusieurs cellules (Cx) du module est détecté de manière récurrente au cours du temps.

4. Procédé selon la revendication 1, **caractérisé en ce qu'**il comporte une étape de détermination des pertes de puissance du module en fonction du temps.

5. Procédé selon l'une des revendications 1 à 3, **caractérisé en ce qu'**il comporte une étape de détermination des pertes de puissance de chaque chaîne (Ch1, Ch2) de l'architecture photovoltaïque en fonction du temps.

6. Procédé selon la revendication 1, **caractérisé en ce qu'**il comporte, pour chaque diode de contournement du module, une étape d'acquisition de valeurs de température de la diode de contournement de manière à former un profil de température en fonction du temps.

7. Procédé selon la revendication 6, **caractérisé en ce qu'**il comporte une étape de détermination d'une valeur de température de référence (Tref2) à partir des valeurs de température acquises pour les diodes de contournement du module.

8. Procédé selon la revendication 7, **caractérisé en ce qu'**il comporte :

- Une étape de comparaison d'une valeur de température acquise pour une diode de contournement avec ladite valeur de température de référence (Tref2) de manière à déterminer un écart de température,
- Une étape de détermination de l'état de fonctionnement de la diode de contournement par comparaison dudit écart de température déterminé avec une valeur seuil (Vs2) mémorisée.

9. Procédé selon la revendication 6, **caractérisé en ce qu'**il comporte une étape de détermination des pertes de puissance de chaque chaîne de l'architecture photovoltaïque en fonction du temps.

10. Procédé selon la revendication 6, **caractérisé en ce qu'**il comporte une étape de détermination d'une valeur de courant (Idiode) contourné par une diode de contournement à un instant donné à partir des caractéristiques électriques de ladite diode et de la puissance thermique dégagée par la diode, ladite puissance thermique dégagée étant fonction de la valeur de température de la diode audit instant, de la valeur de la température ambiante audit instant et de la résistance thermique de la diode.

11. Procédé selon la revendication 10, **caractérisé en ce qu'**il comporte une étape de surveillance de l'état de fonctionnement d'une diode de contournement en fonction de sa température et du courant qui la traverse au cours du temps.

12. Système de surveillance et de diagnostic d'une architecture photovoltaïque, ladite architecture comportant plusieurs chaînes (Ch1, Ch2) de modules photovoltaïques (Mi) connectées en parallèle, chaque chaîne de modules photovoltaïques comportant plusieurs modules photovoltaïques connectés en série, chaque module photovoltaïque comportant plusieurs cellules photovoltaïques (Cx) connectées en série, ladite architecture comportant des diodes de contournement pour contourner chacune une ou plusieurs cellules du module si une cellule était en défaut, ledit système étant **caractérisé en ce qu'**il comporte :

- Un module d'acquisition de plusieurs valeurs de température pour chaque cellule (Cx) dudit module au cours du temps, de manière à former pour chaque cellule un profil de température en fonction du temps,
- Un module de détermination d'une valeur de température de référence (Tref) d'une cellule à partir des valeurs de température acquises,
- Pour un profil de température d'une cellule du module, un module de comparaison d'une valeur de température acquise avec ladite valeur de température de référence de manière à déterminer un écart de température,
- Un module de détermination de l'état de fonctionnement de chaque cellule par comparaison dudit écart de température déterminé avec une valeur seuil mémorisée.

13. Système selon la revendication 12, **caractérisé en ce que** le module de détermination de l'état de fonctionnement de la cellule comporte un module de détermination du type de défaut par comparaison avec plusieurs profils de température mémorisés, correspondant chacun à un type de défaut déterminé.

14. Système selon la revendication 12 ou 13, **caractérisé en ce qu'**il comporte un module de détermination d'un modèle prédictif d'apparition de défaut lorsqu'un défaut sur une ou plusieurs cellules du module est détecté de manière récurrente au cours du temps.

15. Système selon la revendication 12, **caractérisé en ce qu'**il comporte un module de détermination des pertes de puissance du module en fonction du temps.

16. Système selon l'une des revendications 12 à 15, **caractérisé en ce qu'**il comporte un module de détermination des pertes de puissance de chaque chaîne de l'architecture photovoltaïque en fonction du temps.

17. Système selon la revendication 12, **caractérisé en ce qu'**il comporte, pour chaque diode de contournement du module, un module d'acquisition de valeurs de température de la diode de contournement de manière à former un profil de température en fonction du temps.

18. Système selon la revendication 17, **caractérisé en ce qu'**il comporte un module de détermination d'une valeur de température de référence (Tref2) à partir des valeurs de température acquises pour les diodes de contournement du module.

19. Système selon la revendication 17, **caractérisé en ce qu'**il comporte :

- Un module de comparaison d'une valeur de température acquise pour une diode de contournement avec ladite valeur de température de référence de manière à déterminer un écart de température,
- Un module de détermination de l'état de fonctionnement de la diode de contournement par comparaison dudit écart de température déterminé avec une valeur seuil mémorisée.

20. Système selon la revendication 17, **caractérisé en ce qu'**il comporte un module de détermination des pertes de puissance de chaque chaîne de l'architecture photovoltaïque en fonction du temps.

21. Système selon la revendication 17, **caractérisé en ce qu'**il comporte un module de détermination d'une valeur de courant contourné par une diode de contournement à un instant donné à partir des caractéristiques électriques de ladite diode et de la puissance thermique dégagée par la diode, ladite puissance thermique dégagée étant fonction de la valeur de température de la diode audit instant, de la valeur de la température ambiante audit instant et de la résistance thermique de la diode.

22. Système selon la revendication 21, **caractérisé en ce qu'**il comporte un module de surveillance de l'état de fonctionnement d'une diode de contournement en fonction de sa température et du courant qui la traverse au cours du temps.

**Patentansprüche**

1. Verfahren zur Überwachung und Diagnose einer Photovoltaikarchitektur, wobei die Architektur mehrere parallel geschaltete Ketten (Ch1, Ch2) aus Photovoltaikmodulen (Mi) umfasst, wobei jede Kette aus Photovoltaikmodulen mehrere in Reihe geschaltete Photovoltaikmodule umfasst, wobei jedes Photovoltaikmodul mehrere in Reihe geschaltete Photovoltaikzellen (Cx) umfasst, wobei die Architektur Bypassdioden umfasst, um jeweils eine oder mehrere Zellen des Moduls zu bypassen, falls eine Zelle fehlerhaft ist, wobei das Verfahren **dadurch gekennzeichnet ist, dass** es für mindestens ein Photovoltaikmodul die folgenden Schritte umfasst:

- Erfassen mehrerer Temperaturwerte für jede Zelle (Cx) des Moduls im Laufe der Zeit, so dass für jede Zelle ein Temperaturprofil in Abhängigkeit von der Zeit gebildet wird,
- Ermitteln eines Temperatur-Referenzwerts (Tref) einer Zelle ausgehend von den erfassten Temperaturwerten,
- Vergleichen eines erfassten Temperaturwerts mit dem Temperatur-Referenzwert für ein Temperaturprofil einer Zelle des Moduls, um eine Temperaturabweichung zu ermitteln,
- Ermitteln des Betriebszustands jeder Zelle durch Vergleichen der ermittelten Temperaturabweichung mit einem gespeicherten Schwellenwert (Vs).

2. Verfahren nach Anspruch 1, **dadurch gekennzeichnet, dass** der Schritt des Ermittelns des Betriebszustands der Zelle einen Schritt des Ermittelns der Fehlerart durch Vergleichen mit mehreren gespeicherten Temperaturprofilen, die jeweils einer ermittelten Fehlerart entsprechen, umfasst.

3. Verfahren nach Anspruch 2, **dadurch gekennzeichnet, dass** es einen Schritt des Ermittelns eines prädiktiven Modells für das Auftreten eines Fehlers umfasst, falls ein Fehler an einer oder mehreren Zellen (Cx) des Moduls im Laufe der Zeit wiederholt festgestellt wird.

4. Verfahren nach Anspruch 1, **dadurch gekennzeichnet, dass** es einen Schritt des Ermittelns der Leistungsverluste des Moduls in Abhängigkeit von der Zeit umfasst.

5. Verfahren nach einem der Ansprüche 1 bis 3, **dadurch gekennzeichnet, dass** es einen Schritt des Ermittelns der Leistungsverluste jeder Kette (Ch1, Ch2) der Photovoltaikarchitektur in Abhängigkeit von der Zeit umfasst.

6. Verfahren nach Anspruch 1, **dadurch gekennzeichnet, dass** es für jede Bypassdiode des Moduls einen Schritt des Erfassens der Temperaturwerte der Bypassdiode umfasst, um ein Temperaturprofil in Abhängigkeit von der Zeit zu bilden.

7. Verfahren nach Anspruch 6, **dadurch gekennzeichnet, dass** es einen Schritt des Ermittelns eines Temperatur-Referenzwerts (Tref2) ausgehend von den für die Bypassdioden des Moduls erfassten Temperaturwerten umfasst.

8. Verfahren nach Anspruch 7, **dadurch gekennzeichnet, dass** es umfasst:

- einen Schritt des Vergleichens eines für eine Bypassdiode erfassten Temperaturwerts mit dem Temperatur-Referenzwert (Tref2), um eine Temperaturabweichung zu ermitteln,
- einen Schritt des Ermittelns des Betriebszustands der Bypassdiode durch Vergleichen der ermittelten Temperaturabweichung mit einem gespeicherten Schwellenwert (Vs2).

9. Verfahren nach Anspruch 6, **dadurch gekennzeichnet, dass** es einen Schritt des Ermittelns der Leistungsverluste jeder Kette der Photovoltaikarchitektur in Abhängigkeit von der Zeit umfasst.

10. Verfahren nach Anspruch 6, **dadurch gekennzeichnet, dass** es einen Schritt des Ermittelns eines Stromwerts (Idiode), der von einer Bypassdiode zu einem gegebenen Zeitpunkt gebypasst wird, ausgehend von den elektrischen Eigenschaften der Diode und der von der Diode abgegebenen Wärmeleistung umfasst, wobei die abgegebene Wärmeleistung vom Temperaturwert der Diode zu diesem Zeitpunkt, vom Wert der Umgebungstemperatur zu diesem Zeitpunkt und vom Wärmewiderstand der Diode abhängig ist.

11. Verfahren nach Anspruch 10, **dadurch gekennzeichnet, dass** es einen Schritt des Überwachens des Betriebszustands einer Bypassdiode in Abhängigkeit von ihrer Temperatur und dem Strom, der sie im Laufe der Zeit durchfließt, umfasst.

12. System zur Überwachung und Diagnose einer Photovoltaikarchitektur, wobei die Architektur mehrere parallel geschaltete Ketten (Ch1, Ch2) aus Photovoltaikmodulen (Mi) umfasst, wobei jede Kette aus Photovoltaikmodulen mehrere in Reihe geschaltete Photovoltaikmodule umfasst, wobei jedes Photovoltaikmodul mehrere in Reihe geschaltete Photovoltaikzellen (Cx) umfasst, wobei die Architektur Bypassdioden umfasst, um jeweils eine oder mehrere Zellen des Moduls zu bypassen, falls eine Zelle fehlerhaft ist, wobei das System **dadurch gekennzeichnet ist, dass** es umfasst:

- ein Modul zum Erfassen mehrerer Temperaturwerte für jede Zelle (Cx) des Moduls im Laufe der Zeit, um für jede Zelle ein Temperaturprofil in Abhängigkeit von der Zeit zu bilden,
- ein Modul zum Ermitteln eines Temperatur-Referenzwerts (Tref) einer Zelle ausgehend von den erfassten Temperaturwerten,
- ein Modul zum Vergleichen eines erfassten Temperaturwerts mit dem Temperatur-Referenzwert für ein Temperaturprofil einer Zelle, um eine Temperaturabweichung zu ermitteln,
- ein Modul zum Ermitteln des Betriebszustands jeder Zelle durch Vergleichen der ermittelten Temperaturabweichung mit einem gespeicherten Schwellenwert.

13. System nach Anspruch 12, **dadurch gekennzeichnet, dass** das Modul zum Ermitteln des Betriebszustands der Zelle ein Modul zum Ermitteln der Fehlerart durch Vergleichen mit mehreren gespeicherten Temperaturprofilen, die jeweils einer ermittelten Fehlerart entsprechen, umfasst.

14. System nach Anspruch 12 oder 13, **dadurch gekennzeichnet, dass** es ein Modul zum Ermitteln eines prädiktiven Modells für das Auftreten eines Fehlers umfasst, falls ein Fehler an einem oder mehreren Zellen des Moduls im Laufe der Zeit wiederholt festgestellt wird.

15. System nach Anspruch 12, **dadurch gekennzeichnet, dass** es ein Modul zum Ermitteln der Leistungsverluste des Moduls in Abhängigkeit von der Zeit umfasst.

16. System nach einem der Ansprüche 12 bis 15, **dadurch gekennzeichnet, dass** es ein Modul zum Ermitteln der Leistungsverluste jeder Kette der Photovoltaikarchitektur in Abhängigkeit von der Zeit umfasst.

17. Verfahren nach Anspruch 12, **dadurch gekennzeichnet, dass** es für jede Bypassdiode des Moduls ein Modul zum Erfassen der Temperaturwerte der Bypassdiode umfasst, um ein Temperaturprofil in Abhängigkeit von der Zeit zu bilden.

18. System nach Anspruch 17, **dadurch gekennzeichnet, dass** es ein Modul zum Ermitteln eines Temperatur-Referenzwerts (Tref2) ausgehend von den für die Bypassdioden des Moduls erfassten Temperaturwerten umfasst.

19. System nach Anspruch 17, **dadurch gekennzeichnet, dass** es umfasst:

- ein Modul zum Vergleichen eines für eine Bypassdiode erfassten Temperaturwerts mit dem Temperatur-Referenzwert, um eine Temperaturabweichung zu ermitteln,
- ein Modul zum Ermitteln des Betriebszustands der Bypassdiode durch Vergleichen der ermittelten Temperaturabweichung mit einem gespeicherten Schwellenwert.

20. System nach Anspruch 17, **dadurch gekennzeichnet, dass** es ein Modul zum Ermitteln der Leistungsverluste jeder Kette der Photovoltaikarchitektur in Abhängigkeit von der Zeit umfasst.

21. System nach Anspruch 17, **dadurch gekennzeichnet, dass** es ein Modul zum Ermitteln eines Stromwerts, der von einer Bypassdiode zu einem gegebenen Zeitpunkt gebypasst wird, ausgehend von den elektrischen Eigenschaften der Diode und der von der Diode abgegebenen Wärmeleistung umfasst, wobei die abgegebene Wärmeleistung vom Temperaturwert der Diode zu diesem Zeitpunkt, vom Wert der Umgebungstemperatur zu diesem Zeitpunkt und vom Wärmewiderstand der Diode abhängig ist.

22. System nach Anspruch 21, **dadurch gekennzeichnet, dass** es ein Modul zum Überwachen des Betriebszustands einer Bypassdiode in Abhängigkeit von ihrer Temperatur und dem Strom, der sie im Laufe der Zeit durchfließt, umfasst.

## Claims

1. Method for monitoring and for diagnosing a photovoltaic architecture, said architecture including a plurality of strings (Ch1, Ch2) of photovoltaic modules (Mi) that are connected in parallel, each string of photovoltaic modules including a plurality of photovoltaic modules that are connected in series, each photovoltaic module including a plurality of photovoltaic cells (Cx) that are connected in series, said architecture including bypass diodes for each bypassing one or more cells of the module if a cell is faulty, said method being **characterized in that**, for at least one photovoltaic module, it includes the following steps:

- acquiring a plurality of temperature values for each cell (Cx) of said module over time so as to form, for each cell, a profile of temperature as a function of time;
- determining a reference temperature value (Tref) of a cell on the basis of the acquired temperature values;
- for a temperature profile of a cell of the module, comparing an acquired temperature value with said reference temperature value so as to determine a temperature difference;
- determining the operating state of each cell by comparing said determined temperature difference with a stored threshold value (Vs).

2. Method according to Claim 1, **characterized in that** the step of determining the operating state of the cell includes a step of determining the type of fault by comparison with a plurality of stored temperature profiles, each one corresponding to a determined type of fault.

3. Method according to Claim 2, **characterized in that** it includes a step of determining a model for predicting the occurrence of a fault when a fault on one or more cells (Cx) of the module is detected repeatedly over time.

4. Method according to Claim 1, **characterized in that** it includes a step of determining power losses from the module as a function of time.

5. Method according to one of Claims 1 to 3, **characterized in that** it includes a step of determining power losses from each string (Ch1, Ch2) of the photovoltaic architecture as a function of time.

6. Method according to Claim 1, **characterized in that** it includes, for each bypass diode of the module, a step of acquiring temperature values of the bypass diode so as to form a profile of temperature as a function of time.

7. Method according to Claim 6, **characterized in that** it includes a step of determining a reference temperature value (Tref2) on the basis of the temperature values acquired for the bypass diodes of the module.

8. Method according to Claim 7, **characterized in that** it includes:

- a step of comparing a temperature value acquired for a bypass diode with said reference temperature value (Tref2) so as to determine a temperature difference;
- a step of determining the operating state of the bypass diode by comparing said determined temperature difference with a stored threshold value (Vs2).

9. Method according to Claim 6, **characterized in that** it includes a step of determining the power losses from each string of the photovoltaic architecture as a function of time.

10. Method according to Claim 6, **characterized in that** it includes a step of determining a value of current (Idiode) bypassed by a bypass diode at a given time on the basis of the electrical characteristics of said diode and the thermal power given off by the diode, said thermal power that is given off being dependent on the temperature value of the diode at said time, on the value of the ambient temperature at said time and on the thermal resistance of the diode.

11. Method according to Claim 10, **characterized in that** it includes a step of monitoring the operating state of a bypass diode as a function of its temperature and of the current flowing therethrough over time.

12. System for monitoring and for diagnosing a photovoltaic architecture, said architecture including a plurality of strings (Ch1, Ch2) of photovoltaic modules (Mi) that are connected in parallel, each string of photovoltaic modules including a plurality of photovoltaic modules that are connected in series, each photovoltaic module including a plurality of photovoltaic cells (Cx) that are connected in series, said architecture including bypass diodes for each bypassing one or more cells of the module if a cell is faulty, said system being **characterized in that** it includes:

- a module for acquiring a plurality of temperature values for each cell (Cx) of said module over time so as to form, for each cell, a profile of temperature as a function of time;
- a module for determining a reference temperature value (Tref) of a cell on the basis of the acquired temperature values;
- for a temperature profile of a cell of the module, a module for comparing an acquired temperature value with said reference temperature value so as to determine a temperature difference;
- a module for determining the operating state of each cell by comparing said determined temperature difference with a stored threshold value.

13. System according to Claim 12, **characterized in that** the module for determining the operating state of the cell includes a module for determining the type of fault by comparison with a plurality of stored temperature profiles, each one corresponding to a determined type of fault.

14. System according to Claim 12 or 13, **characterized in that** it includes a module for determining a model for predicting the occurrence of a fault when a fault on one or more cells of the module is detected repeatedly over time.

15. System according to Claim 12, **characterized in that** includes a module for determining power losses from the module as a function of time.

16. System according to one of Claims 12 to 15, **characterized in that** it includes a module for determining power losses from each string of the photovoltaic architecture as a function of time.

17. System according to Claim 12, **characterized in that** it includes, for each bypass diode of the module, a module for acquiring temperature values of the bypass diode so as to form a profile of temperature as a function of time.

18. System according to Claim 17, **characterized in that** it includes a module for determining a reference temperature value (Tref2) on the basis of the temperature values acquired for the bypass diodes of the module.

19. System according to Claim 17, **characterized in that** it includes:

- a module for comparing a temperature value acquired for a bypass diode with said reference temperature value so as to determine a temperature difference;
- a module for determining the operating state of the bypass diode by comparing said determined temperature difference with a stored threshold value.

20. System according to Claim 17, **characterized in that** includes a module for determining the power losses from each string of the photovoltaic architecture as a function of time.

21. System according to Claim 17, **characterized in that** it includes a module for determining a value of current bypassed by a bypass diode at a given time on the basis of the electrical characteristics of said diode and the thermal power given off by the diode, said thermal power that is given off being dependent on the temperature value of the diode at said time, on the value of the ambient temperature at said time and on the thermal resistance of the diode.

22. System according to Claim 21, **characterized in that** includes a module for monitoring the operating state of a bypass diode as a function of its temperature and of the current flowing therethrough over time.

**Fig. 1**

Fig. 2A

Fig. 2B

Fig. 3

*Fig. 4*

Fig. 5

*Fig. 6*

**Fig. 7A**

**Fig. 7B**

Z1

**Fig. 7C**

Z2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2998756 A
- WO 2015118608 A
- US 6512458 B1
- US 2011088744 A1
- US 2011316343 A1
- EP 2998756 A1